# FASCICULE DE BREVET EUROPEEN

(11) **EP 1 918 088 B1**
(45) Date de publication et mention de la délivrance du brevet: **14.04.2010**
(21) Numéro de dépôt: 07118441.0
(22) Date de dépôt: 15.10.2007
(51) Int. Cl.: B29D 30/16, B29D 30/30, B29D 30/70

(54) **Dispositif et procédé de guidage d'un fil**
Vorrichtung und Verfahren zur Durchführung eines Drahtes
Device and method of guiding a cord

(30) Priorité: 02.11.2006 FR 0609647
(43) Date de publication de la demande: 07.05.2008
(73) Titulaire: Société de Technologie Michelin, 63000 Clermont-Ferrand (FR); Michelin Recherche et Technique S.A., 1763 Granges-Paccot (CH)
(72) Inventeur: Martin, Pascal, 63730 Corent (FR); Souche, Jean-Louis, 69440 Taluyers (FR)
(74) Mandataire: Reynaud, Georges

(56) Documents cités:
- EP-A1- 0 845 348
- EP-A2- 1 147 864
- DE-A1- 2 233 999
- US-A- 3 570 353
- US-A- 3 894 906

## Description

L'invention concerne en particulier la fabrication des pneumatiques et se rapporte plus précisément à la fabrication d'armatures de renforcement.

Plus précisément, elle concerne un perfectionnement d'un appareil destiné à poser des éléments de renforcement destinés à former l'armature placée sous la bande de roulement d'un pneumatique.

Un appareil de ce type est connu de l'état de la technique, et est décrit en détail dans la publication EP 248 301. Un appareil de ce type permet de projeter les tronçons de fils destinés à former l'armature du pneumatique sur une surface de réception, à la manière d'une lanière de fouet.

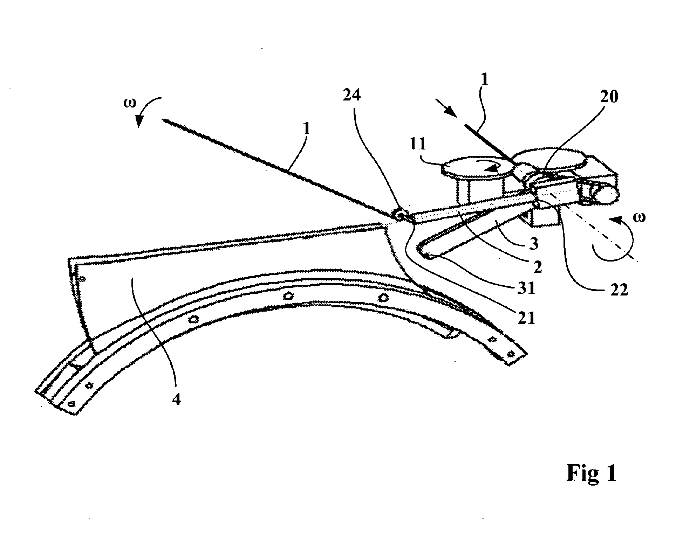

La figure 1 illustre un appareil de ce type utilisant ce principe. Un tel appareil utilise un fil 1 conditionné par exemple sous la forme d'une bobine d'alimentation, non représentée. L'appareil projette des tronçons de fils sur une surface de réception (non représentée) qui peut être constituée par la surface du pneumatique ou encore par tout autre surface telle qu'un anneau de renforcement sommet destiné à être transféré sur l'ébauche de pneumatique ou encore une surface plane destinée à former une nappe de renforcement sommet sous forme de produit semi fini.

Le terme fil doit être compris dans un sens tout à fait général, englobant un mono filament, un multi filament, un câblé ou un retors ou un assemblage équivalent, et ceci, quelle que soit la matière constituant le fil ou le traitement qu'il pourrait subir, par exemple un traitement de surface pour favoriser sa liaison intime avec du caoutchouc, voire encore un traitement de gommage entourant ledit fil d'une couche de caoutchouc pour permettre son adhésion directe sur le support lors de sa projection.

Ledit dispositif comprend :
- des moyens d'appel 11 de fil 1 à partir d'une source de fil,
- un conduit rotatif 2 fixé sur un arbre 20 constituant l'axe de rotation dudit conduit, de manière telle que l'extrémité radiale extérieure 21 dudit conduit soit orientée sensiblement radialement par rapport à l'axe de rotation, ledit conduit recevant le fil 1 par son extrémité centrale 22 opposée à ladite extrémité radiale extérieure 21 en provenance desdits moyens d'appel, ledit fil sortant par ladite extrémité radiale extérieure, lesdits moyens d'appel contrôlant la vitesse linéaire d'avance du fil à l'intérieur dudit conduit rotatif,
- des moyens pour entraîner en rotation ledit conduit rotatif,
- des moyens pour sectionner le fil (31, 24) agissant sur le fil de façon à libérer un tronçon à chaque tour dudit conduit rotatif.

Pour plus de détails sur le fonctionnement de cet appareil il est suggéré de consulter la publication EP 248 301 susmentionnée.

Ce dispositif peut comprendre en outre un guide fil 4 pour recevoir et guider des tronçons de fil, comme cela est décrit également dans la publication EP 248 301, ainsi que dans les publications EP 845 348 ou EP 845 349.

L'objet de l'invention concerne le système de coupe utilisé dans ce type d'appareil.

Il a en effet été mis en évidence que le tronçon de fil se déforme pendant sa course libre sous l'action de l'énergie emmagasinée au moment de la coupe. Cette déformation est alors susceptible de modifier sensiblement la configuration du fil au moment où ce dernier « attérit » sur la surface de réception.

L'invention a pour objet de corriger ce phénomène. A cet effet, un heurtoir est disposé sur le parcours de l'extrémité libre du tronçon de fil susceptible de se déformer de telle sorte que, lorsque le dispositif est en fonctionnement, ladite extrémité vienne frapper ledit heurtoir avant de rentrer en contact avec ladite surface de réception S.

La présente invention se réfère à un dispositif de fabrication d'un renforcement à partir d'un fil déposé directement à sa place finale en projetant des tronçons de fil sur une surface de réception, ledit dispositif comprenant les caractéristiques définies dans la revendication 1 .

La présente invention se réfère aussi à un procédé de réalisation d'un tel renforcement, selon les étapes spécifiées dans la revendication 6.

Des formes avantageuses de l'invention font l'objet des revendications dépendantes.

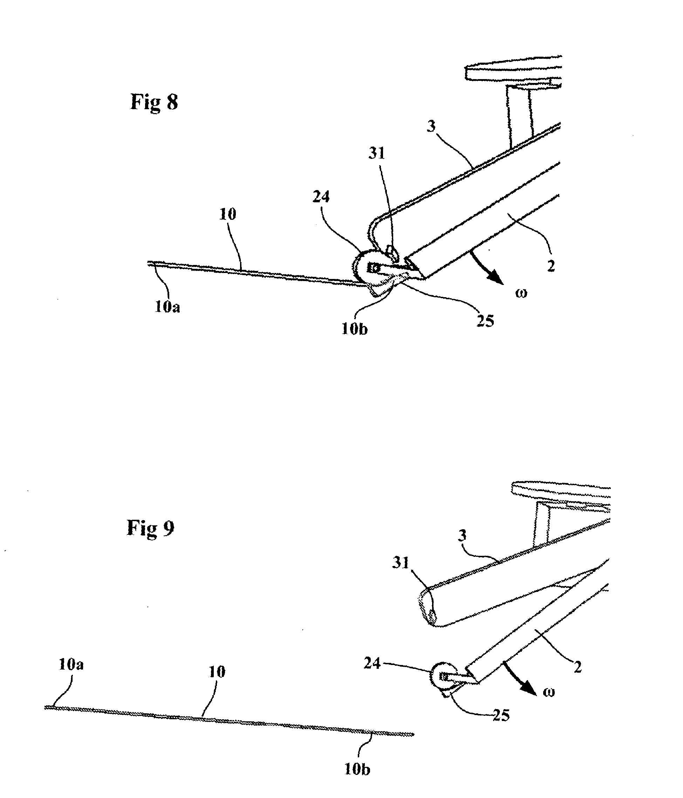

La description qui suit a pour objet de mettre en évidence le phénomène physique dont il est question et d'un mode particulier de réalisation de l'invention en s'appuyant sur les figures 1 à 9 dans lesquelles :
- La figure 1 représente une vue schématique en perspective d'un dispositif de pose,
- Les figures 2 à 5 représentent des vues schématiques de la cinématique du fil et du tronçon de fil avant et après la coupe,
- la figure 6 représente une vue schématique de coté d'un dispositif de coupe équipé d'un heurtoir selon l'invention,
- la figure 7 représente le même dispositif vue selon une coupe frontale selon AA,
- les figures 8 et 9 représentent des vues schématiques de la cinématique de l'extrémité 10b du tronçon de fil 10 lorsque le moyen de coupe est équipé d'un heurtoir selon l'invention.

Pour la compréhension de la description qui suit, on désignera par le chiffre repère 1 le fil non sectionné et par le chiffre repère 10 le tronçon de fil, lorsque ce dernier est séparé du fil. De même, le tronçon de fil comprend deux extrémités, désignées respectivement par les repères 10 a et 10b, l'extrémité 10a correspondant à l'extrémité la plus éloignée de l'ensemble de coupe, et l'extrémité 10b correspondant à l'extrémité la plus proche de l'ensemble de coupe et par voie de conséquence de l'extrémité radiale extérieure 21 du conduit rotatif 2.

Les moyens pour sectionner le fil 1 de manière à libérer un tronçon de fil 10 sont formés en règle générale d'un couteau 31 et d'un organe jouant le rôle d'une enclume 24. L'un de ces éléments est rendu mobile par rapport à l'autre. Le fil est maintenu par l'enclume 24, et sectionné par le couteau 31. Pour que le fil soit sectionné, il est indifférent que le couteau soit mobile par rapport à l'enclume ou que réciproquement, l'enclume soit mobile par rapport au couteau. Aussi, dans le repère du fil, et par convention, on désignera par l'enclume, la partie fixe du moyen de coupe, et par le couteau la partie mobile du moyen de coupe. L'enclume peut être constituée par exemple par un galet apte à servir également de guide au fil sortant du conduit rotatif 2.

Il a été mis en évidence que l'action du couteau 31 sur le fil avait pour effet de conférer une certaine quantité de mouvement à l'extrémité 10b du tronçon de fil placé du coté du moyen de coupe. Cette quantité de mouvement est orientée dans le sens du mouvement du couteau ou de la partie mobile du moyen de coupe.

D'autre part, une fois libéré par la coupe, le tronçon de fil 10 effectue un déplacement libre dans l'espace avant de rencontrer la surface de pose. Il s'en suit que, au cours de ce déplacement libre, l'extrémité 10b va restituer la quantité de mouvement en générant un déplacement de ladite extrémité dans le sens opposé, ce qui a pour effet de déformer l'extrémité 10b et de modifier localement de manière sensible la forme généralement rectiligne du tronçon de fil 10.

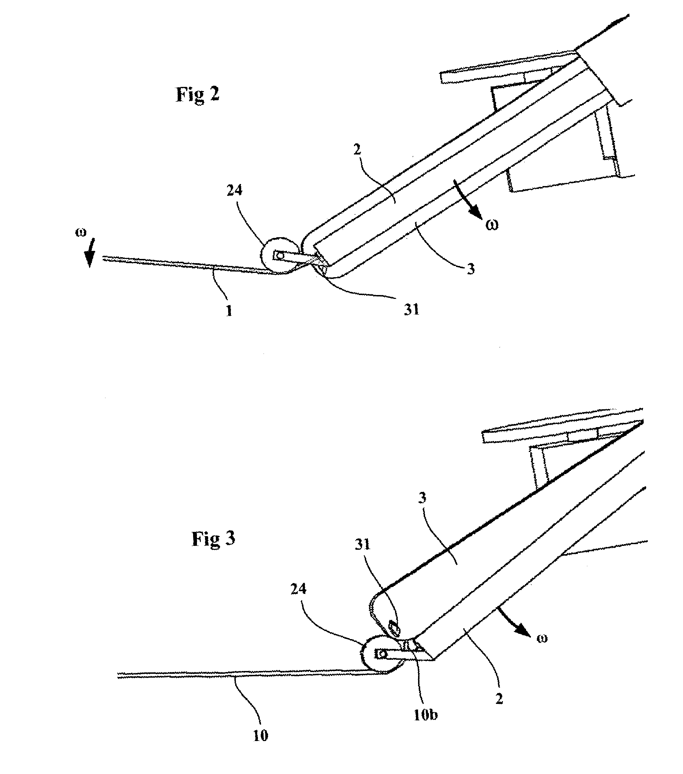

Les figures 2 à 5 permettent de comprendre et de visualiser de façon schématique le phénomène physique dont on cherche à corriger les effets.

Le fil 1 est déroulé par les moyens d'appel de manière à délivrer la longueur de tronçon de fil voulu à chaque rotation du conduit rotatif 2. Le couteau 31 est placé en extrémité d'un bras fixe 3. L'enclume 24 est disposée à l'extrémité radiale du conduit 2 qui tourne autour de son axe à une vitesse de rotation égale à ω. L'enclume 24 est fixe dans le repère relatif du fil. Le fil 1 est sectionné au passage du bras 2 au droit du couteau 31. Le couteau a une vitesse relative égale à -ω par rapport à l'enclume 24 et au fil 1.

La figure 2 représente les positions respectives du fil 1 de l'enclume 24 et du couteau 31, juste avant la coupe. La figure 3 montre la forme de l'extrémité 10b juste après le passage du couteau 31. On observe à cet instant que l'extrémité 10b du tronçon 10 pivote autour de l'enclume 24, et que ladite extrémité est entraînée par le couteau 31.

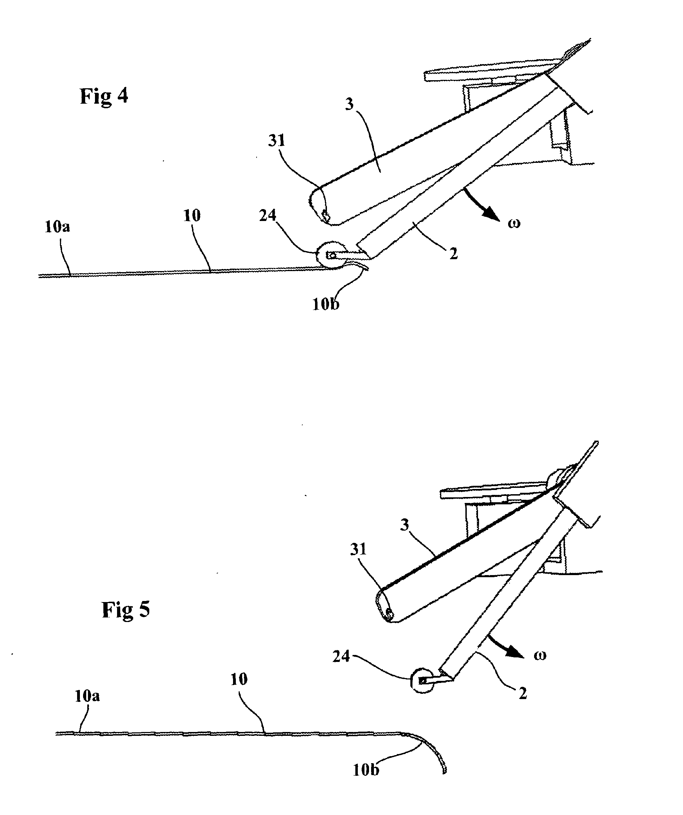

La figure 4 montre le tronçon 10 qui a été projeté en direction de la surface de réception S (non représentée), alors que ledit tronçon est en train de se dégager de l'extrémité du conduit rotatif 2. L'extrémité 10b est alors encore en contact avec l'enclume 24 et pivote autour de ce point dans la direction opposée à la direction du mouvement du couteau par rapport au fil. Dans cette configuration, l'extrémité 10b s'incline dans la direction du mouvement du fil, ce qui est représenté à la figure 5, sur laquelle on observe que le tronçon de fil a une forme généralement rectiligne et que l'extrémité 10b est recourbée dans la direction de la surface de réception.

Il résulte de ce phénomène que, dans certaines gammes de vitesse de fonctionnement, lorsque le fil « atterrit » sur la surface de réception S , l'extrémité 10b n'est pas positionnée de manière suffisamment précise et reproductible, en regard des critères retenus pour conférer au pneumatique toutes les performances désirées.

L'invention a pour objet de combattre ce phénomène de déformation de l'extrémité du tronçon de fil, de manière à ce que le tronçon de fil ait une forme sensiblement rectiligne au moment de sa mise en contact avec la surface de réception.

Pour atteindre le résultat recherché, il est proposé de placer un heurtoir 25 disposé sur le parcours de l'extrémité libre 10b du tronçon de fil 10 de telle sorte que ladite extrémité 10b vienne frapper ledit heurtoir avant de rentrer en contact avec la surface de réception.

Le choc entre le heurtoir et l'extrémité libre 10b du tronçon 10 a pour effet de conférer à ladite extrémité une quantité de mouvement sensiblement équivalente et de sens opposé à la quantité de mouvement acquise par le fil après sa rotation autour de l'enclume 24, et conférée par le mouvement du couteau. La restitution de cette quantité de mouvement permet à l'extrémité libre 10b de se réaligner avec le reste du tronçon de fil 10.

L'invention concerne également le procédé mettant en oeuvre le dispositif;

Ce procédé de réalisation d'un renforcement pour pneumatique, ledit renforcement comportant des fils adjacents et sensiblement parallèles, est un procédé du type dans lequel chaque tronçon de fil 10 est projeté individuellement à son emplacement sur une surface de réception S. Les tronçons de fil 10 sont projetés par des moyens en rotation 2, la surface de réception et le fil ayant des propriétés d'auto-adhésion.

Lesdits moyens en rotation comprennent
- des moyens d'appel 11 de fil 1 à partir d'une source de fil,
- un conduit rotatif 2 fixé sur un arbre 20 constituant l'axe de rotation dudit conduit, de manière telle que l'extrémité radiale extérieure 21 dudit conduit soit orientée sensiblement radialement par rapport à l'axe de rotation, ledit conduit recevant le fil 1 par son extrémité centrale 22 opposée à ladite extrémité radiale extérieure 21 en provenance desdits moyens d'appel, ledit fil sortant par ladite extrémité radiale extérieure, lesdits moyens d'appel contrôlant la vitesse de progression du fil à l'intérieur dudit conduit rotatif,
- des moyens pour entraîner en rotation ledit conduit rotatif,
- des moyens pour sectionner le fil comprenant une enclume 24 fixe par rapport au fil, et un couteau mobile 31 agissant sur le fil en collaboration avec ladite enclume 24 de façon à libérer, à chaque tour dudit conduit rotatif, un tronçon 10 dont l'extrémité 10b est l'extrémité du tronçon située du coté du moyen de coupe.

Ce procédé se caractérise en ce que l'extrémité 10b du tronçon de fil vient frapper un heurtoir 25 avant de prendre contact avec la surface de réception S.

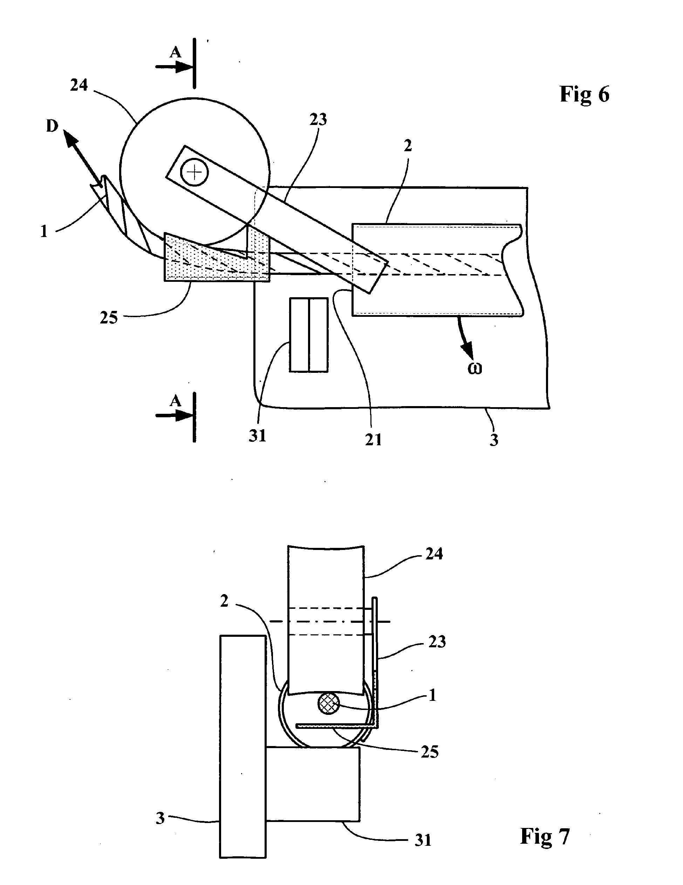

La figure 6 représente le conduit rotatif 2 dans la position qui précède la coupe du fil 1 par le couteau 31.

Le fil 1 sort du conduit rotatif 2 par l'extrémité radiale 21 dudit conduit. Ledit conduit rotatif est entraîné en rotation par des moyens de mise en rotation (non représentés). Les moyens d'appels 11 (non représentés) délivrent une longueur voulue de fil qui, sous l'effet de la force centrifuge, se déploie dans l'espace à la manière de la lanière d'un fouet dans la direction de la flèche D.

Une enclume 24 est fixée à l'extrémité du conduit rotatif par l'intermédiaire d'un support 23. L'enclume peut servir également de moyen de guidage du fil 1 en sortie du conduit rotatif et peut tout aussi bien être monté sur un axe rotatif.

Un heurtoir 25 est disposé sous l'enclume 24. Le heurtoir est rendu solidaire de l'extrémité du conduit par une attache reliée au support 23 de l'enclume 24.

On s'arrange pour que ledit heurtoir soit disposé sur le parcours de l'extrémité libre 10b du tronçon de fil 10.

En pratique, il est possible de déterminer avec une bonne précision la trajectoire du tronçon de fil en utilisant un moyen d'éclairage stroboscopique couplé à un moyen d'enregistrement photographique dont le déclanchement est activé par le moyen d'éclairage. On peut alors suivre le trajet du tronçon de fil et déterminer la position du heurtoir.

Le mode préférentiel de réalisation consiste à disposer le heurtoir sur le conduit rotatif. Ce mode de réalisation permet en pratique de corriger avec une grande précision la forme du fil dés la sortie du conduit rotatif, tout en réduisant l'encombrement du dispositif.

La forme du heurtoir est déterminée par la longueur spécifique de mise en contact avec l'extrémité 10b du tronçon 10, laquelle est dépendante de la quantité d'énergie qu'il est nécessaire de conférer à ladite extrémité pour la redresser. En pratique cette longueur est comprise entre environ 5 mm et environ 15 mm.

Il a par ailleurs été constaté que le fait que le conduit soit en rotation par rapport au tronçon de fil 10 au moment du choc était d'un effet secondaire pour l'obtention du résultat recherché.

Le bras 3 est fixe par rapport au conduit rotatif 2 et comporte à son extrémité un couteau 31.

Sous l'effet du mouvement rotatif relatif du conduit par rapport au bras, le couteau 31 tranche le fil 1 qui est retenu par l'enclume 24.

La présente description a pour objet une forme préférentielle de réalisation de l'invention permettant de rectifier la forme de l'extrémité 10b du tronçon de fil avant qu'il « n'atterrisse » sur la surface de réception. Toutefois, l'homme du métier pourra adapter à sa convenance la disposition des différents organes pour obtenir l'effet recherché.

## Revendications

1. Dispositif de fabrication d'un renforcement à partir d'un fil déposé directement à sa place finale en projetant des tronçons dudit fil sur une surface de réception (S) ledit appareil comportant un ensemble comprenant :
- des moyens d'appel (11) de fil (1) à partir d'une source de fil,
- un conduit rotatif (2) fixé sur un arbre (20) constituant l'axe de rotation dudit conduit, de manière telle que l'extrémité radiale extérieure (21) dudit conduit soit orientée sensiblement radialement par rapport à l'axe de rotation, ledit conduit recevant le fil (1) par son extrémité centrale (22) opposée à ladite extrémité radiale extérieure (21) en provenance desdits moyens d'appel, ledit fil sortant par ladite extrémité radiale extérieure, lesdits moyens d'appel contrôlant la vitesse de progression du fil à l'intérieur dudit conduit rotatif,
- des moyens pour entraîner en rotation ledit conduit rotatif,
- des moyens pour sectionner le fil comprenant une enclume (24) fixe par rapport au fil, et un couteau mobile (31) agissant sur le fil en collaboration avec ladite enclume (24) de façon à libérer à chaque tour dudit conduit rotatif, un tronçon (10) dont l'extrémité (10b) est l'extrémité du tronçon située du coté du moyen de coupe,
**caractérisé en ce qu'**un heurtoir (25) est disposé sur le parcours de l'extrémité libre (10b) de telle sorte que, lorsque le dispositif est en fonctionnement, ladite extrémité vienne frapper ledit heurtoir (25) avant de rentrer en contact avec la surface de réception (S).

2. Dispositif selon la revendication 1, dans lequel le heurtoir (25) est fixé sur l'extrémité radiale (21) du conduit rotatif (2).

3. Dispositif selon la revendication 1 ou 2, dans lequel l'enclume (24) est disposée à l'extrémité radiale (21) du conduit rotatif (2).

4. Dispositif selon la revendication 3, dans lequel l'enclume (24) est formée par le galet de guidage du fil (1) en sortie du conduit rotatif (2).

5. Dispositif selon l'une des revendications 1 à 4 dans lequel le couteau (31) est disposé sur un bras (3) fixe par rapport au conduit rotatif (2).

6. Procédé de réalisation d'un renforcement pour pneumatique, ledit renforcement comportant des fils adjacents et sensiblement parallèles, dans lequel chaque tronçon de fil (10) est projeté individuellement à son emplacement par des moyens en rotation (2) sur une surface de réception (S), la surface de réception et le fil ayant des propriétés d'auto-adhésion, dans lequel lesdits moyens en rotation comprennent
- des moyens d'appel (11) de fil (1) à partir d'une source de fil.
- un conduit rotatif (2) fixé sur un arbre (20) constituant l'axe de rotation dudit conduit, de manière telle que l'extrémité radiale extérieure (21) dudit conduit soit orientée sensiblement radialement par rapport à l'axe de rotation, ledit conduit recevant le fil (1) par son extrémité centrale (22) opposée à ladite extrémité radiale extérieure (21) en provenance desdits moyens d'appel, ledit fil sortant par ladite extrémité radiale extérieure, lesdits moyens d'appel contrôlant la vitesse linéaire d'avance du fil à l'intérieur dudit conduit rotatif
- des moyens pour entraîner en rotation ledit conduit rotatif.
- des moyens pour sectionner le fil comprenant une enclume (24) fixe par rapport au fil, et un couteau mobile (31) agissant sur le fil en collaboration avec ladite enclume (24) de façon à libérer à chaque tour dudit conduit rotatif, un tronçon (10) dont l'extrémité (10b) est l'extrémité du tronçon située du coté du moyen de coupe,
**caractérisé en ce que** l'extrémité 10b du tronçon de fil vient frapper un heurtoir (25) avant de prendre contact avec la surface de réception (S).

## Claims

1. Device for manufacturing a reinforcement from a thread laid down directly in its final location by spraying lengths of the said thread onto a receiving surface (S), the said apparatus comprising an assembly comprising:
- feed means (11) for feeding thread (1) from a source of thread,
- a rotary conduit (2) fixed to a shaft (20) constituting the axis of rotation of the said conduit, so that the outer radial end (21) of the said conduit is directed substantially radially with respect to the axis of rotation, the said conduit receiving the thread (1) via its central end (22) which is the opposite end to the said outer radial end (21) arriving from the said feed means, the said thread leaving via the said outer radial end, the said feed means controlling the rate of advance of the thread inside the said rotary conduit,
- means for rotating the said rotary conduit,
- thread-cutting means comprising an anvil (24) which is fixed with respect to the thread, and a moving cutter (31) acting on the thread in collaboration with the said anvil (24) so as, for each revolution of the said rotary conduit, to release a length (10) of which the end (10b) is the end of the length at the cutting means end,
**characterized in that** a buffer (25) is positioned in the path of the free end (10b) so that, when the device is operating, the said end strikes the said buffer (25) before coming into contact with the receiving surface (S).

2. Device according to Claim 1, in which the buffer (25) is fixed to the radial end (21) of the rotary conduit (2).

3. Device according to Claim 1 or 2, in which the anvil (24) is positioned at the radial end (21) of the rotary conduit (2).

4. Device according to Claim 3, in which the anvil (24) is formed by the roller that guides the thread (1) as it leaves the rotary conduit (2).

5. Device according to one of Claims 1 to 4 in which the cutter (31) is positioned on an arm (3) that is fixed with respect to the rotary conduit (2).

6. Method of producing a reinforcement for a tyre, the said reinforcement comprising adjacent and substantially parallel threads, in which method each length of thread (10) is sprayed individually into its position by rotating means (2) onto a receiving surface (S), the receiving surface and the thread having self-stick properties in which method the said rotating means comprise
- feed means (11) for feeding thread (1) from a source of thread,
- a rotary conduit (2) fixed to a shaft (20) constituting the axis of rotation of the said conduit, so that the outer radial end (21) of the said conduit is directed substantially radially with respect to the axis of rotation, the said conduit receiving the thread (1) via its central end (22) which is the opposite end to the said outer radial end (21) arriving from the said feed means, the said thread leaving via the said outer radial end, the said feed means controlling the linear rate of advance of the thread inside the said rotary conduit,
- means for rotating the said rotary conduit,
- thread-cutting means comprising an anvil (24) which is fixed with respect to the thread, and a moving cutter (31) acting on the thread in collaboration with the said anvil (24) so as, for each revolution of the said rotary conduit, to release a length (10) of which the end (10b) is the end of the length at the cutting means end,
**characterized in that** the end (10b) of the length of thread strikes a buffer (25) before coming into contact with the receiving surface (8).

## Patentansprüche

1. Vorrichtung zur Herstellung einer Verstärkung ausgehend von einem Draht, der direkt an seinem endgültigen Platz aufgebracht wird, indem Abschnitte des Drahts auf eine Aufnahmefläche (S) projiziert werden, wobei das Gesät eine Einheit aufweist, die enthält:
- Einrichtungen (11) zum Abruf von Draht (1) ausgehend von einer Drahtquelle,
- einen drehbaren Kanal (2), der an einer die Drehachse des Kanals bildenden Welle (20) derart befestigt ist, dass das äußere radiale Ende (21) des Kanals bezüglich der Drehachse im Wesentlichen radial ausgerichtet ist, wobei der Kanal den Draht (1) über sein zentrales Ende (22) entgegengesetzt zum äußeren radialen Ende (21) von den Abrufeinrichtungen kommend aufnimmt, wobei der Draht über das äußere radiale Ende austritt, wobei die Abrufeinrichtungen die Vorschubgeschwindigkeit des Drahts innerhalb des drehbaren Kanals steuern,
- Einrichtungen, um den drehbaren Kanal in Drehung zu versetzen,
- Einrichtungen zum Ablängen des Drahts, die einen bezüglich des Drahts festen Amboss (24) und ein bewegliches Messer (31) enthalten, das zusammen mit dem Amboss (24) derart auf den Draht einwirkt, dass bei jeder Drehung des drehbaren Kanals ein Abschnitt (10) freigegeben wird, dessen Ende (10b) das Ende des Abschnitts ist, das sich auf der Seite der Schneideeinrichtung befindet,
**dadurch gekennzeichnet, dass** ein Prellbock (25) auf der Strecke des freien Endes (10b) angeordnet ist, so dass, wenn die Vorrichtung in Betrieb ist, das Ende auf den Prellbock (25) schlägt, ehe es mit der Aufnahmefläche (S) in Kontakt kommt.

2. Vorrichtung nach Anspruch 1, bei der der Prellbock (25) am radialen Ende (21) des drehbaren Kanals (2) befestigt ist.

3. Vorrichtung nach Anspruch 1 oder 2, bei der der Amboss (24) am radialen Ende (21) des drehbaren Kanals (2) angeordnet ist.

4. Vorrichtung nach Anspruch 3, bei der der Amboss (24) von der Führungsrolle des Drahts (1) am Ausgang des drehbaren Kanals (2) gebildet wird.

5. Vorrichtung nach einem der Ansprüche 1 bis 4, bei der das Messer (31) auf einem Arm (3) angeordnet ist, der bezüglich des drehbaren Kanals (2) fest ist.

6. Verfahren zur Herstellung einer Verstärkung für Luftreifen, wobei die Verstärkung benachbarte und im Wesentlichen parallele Drähte aufweist, bei dem jeder Drahtabschnitt (10) von drehenden Einrichtungen (2) einzeln auf seine Stelle auf einer Aufnahmefläche (S) projiziert wird, wobei die Aufnahmefläche und der Draht selbsthaftende Eigenschaften haben, wobei die drehenden Einrichtungen enthalten
- Einrichtungen (11) zum Abruf von Draht (1) ausgehend von einer Drahtquelle,
- einen drehbaren Kanal (2), der auf einer die Drehachse des Kanals bildenden Welle (20) derart befestigt ist, dass das äußere radiale Ende (21) des Kanals bezüglich der Drehachse im Wesentlichen radial ausgerichtet ist, wobei der Kanal den Draht (1) über sein zentrales Ende (22) entgegengesetzt zum äußeren radialen Ende (21) von den Abrufeinrichtungen kommend aufnimmt, wobei der Draht über das äußere radiale Ende austritt, wobei die Abrufeinrichtungen die lineare Vorschubgeschwindigkeit des Drahts innerhalb des drehbaren Kanals steuern,
- Einrichtungen, um den drehbaren Kanal in Drehung zu versetzen,
- Einrichtungen zum Ablängen des Drahts, die einen bezüglich des Drahts festen Amboss (24) und ein bewegliches Messer (31) enthalten, das zusammen mit dem Amboss (24) auf den Draht derart einwirkt, dass bei jeder Drehung des drehbaren Kanals ein Abschnitt (10) freigegeben wird, dessen Ende (10b) das Ende des Abschnitts ist, das sich auf der Seite der Schneideeinrichtung befindet,
**dadurch gekennzeichnet, dass** das Ende (10b) des Drahtabschnitts auf einen Prellbock (25) schlägt, ehe es mit der Aufnahmefläche (S) in Kontakt kommt.
